# EUROPEAN PATENT SPECIFICATION

(11) **EP 3 554 669 B1**
(45) Date of publication and mention of the grant of the patent: **14.10.2020**
(21) Application number: 16834278.0
(22) Date of filing: 16.12.2016
(51) Int. Cl.: B01D 33/21, F16K 11/074, F16K 11/02, B01D 33/82, B01D 33/80

(54) **DISTRIBUTOR VALVE BODY FOR A VACUUM FILTER, A COMBINATION AND A VACUUM FILTER HAVING SUCH A DISTRIBUTOR VALVE BODY, AND METHODS RELATED THERETO**
VERTEILVENTILKÖRPER FÜR VAKUUMFILTER, KOMBINATION UND VAKUUMFILTER MIT VERTEILVENTILKÖRPER, UND METHODEN DAZU
VALVE DE DISTRIBUTION POUR UN FILTRE SOUS VIDE, COMBINAISON ET FILTRE SOUS VIDE AVEC CE VALVE, ET PROCÉDÉ ASSOCIÉ

(43) Date of publication of application: 23.10.2019
(73) Proprietor: Outotec (Finland) Oy, 02230 Espoo (FI)
(72) Inventor: VÄNTTINEN, Kari, 02330 ESPOO (FI)
(74) Representative: Boco IP Oy Ab
(86) International application number: PCT/FI2016/050885
(87) International publication number: WO 2018/109258

(56) References cited:
- EP-A2- 0 400 787
- US-A- 5 958 231

## Description

### FIELD OF THE DISCLOSURE

The present disclosure relates to distributor valves for vacuum filters. More particularly, the present disclosure relates to a distributor valve body for a vacuum filter. The present disclosure further concerns a combination for a distributor valve and methods for replacing and modernizing distributor valves of vacuum filters.

### BACKGROUND OF THE DISCLOSURE

Vacuum filters, particularly rotational vacuum filters, such as disc or drum filters, are equipped with a rotating filter body partially submerged in or otherwise brought into contact with the slurry to be filtered. During the rotation cycle, the inside of a portion of the filter body submerged in or otherwise brought into contact with the slurry is subjected to a vacuum for drawing in filtrate from the slurry through the respective portion of the filter body. Subsequently in the rotation cycle, the inside of a portion of the filter body not in contact with the slurry is subjected to a vacuum for further drawing in filtrate from a layer of slurry formed on the filter body and for drawing in air through the formed slurry layer, so as to dry it and to form a solids cake. Generally, but not necessarily, the vacuum subjected to the portion submerged in the slurry and the vacuum subjected to the portion not submerged in the slurry are unequal.

Next in the rotation cycle, particularly in connection with capillary filters, the solids cake is scraped off the filter body, and subsequently, the inside of a portion of the filter body having the filter cake scraped off is washed for unblocking the pores of the filter body by introducing a backwash fluid flow flowing in the opposite direction than the filtrate flow. Alternatively, in connection with more conventional cloth vacuum filters, the solids cake is removed from the filter element by providing a fluid pressure impact in an outwardly direction from the filter element, often referred to as snap blow. Finally, the cleaned portion of the filter body is again submerged into or otherwise brought into contact with the slurry and the rotation cycle starts all over again.

Typically, the filter body is arranged onto a shaft enabling it to be rotated. Furthermore, the filter body is divided into segments formed by separate filter elements, each of which are connected to a respective conduit running to a distribution end of the filter shaft. The distributor end is equipped with a distributor valve for selectively distributing vacuum(s), backwash fluid and possibly other fluid flows to the filter elements of the filter body correspondingly to their position in the rotation cycle.

For each fluid flow, the distributor valve comprises a recess connected to a valve port allowing fluid flow from the valve port to the conduit currently opposing the recess. As the filter shaft, and the conduits along with it, rotate during the rotation cycle, different fluid flows are allowed and blocked to different conduits accordingly. Moreover, the distributor valve and the recesses therein can be positioned to match the surrounding vacuum filter such that a desired fluid flow corresponding to the operation cycle is achieved for the different filter elements of the filter body.

Publication EP 0 400 787 A2 discloses an adjustable valve for use with filters wherein internal valve partition members effect the relative duration and timing of atmospheric and vacuum portions. US 5 574 396 A discloses a rotary filter with a control head.

### BRIEF DESCRIPTION OF THE DISCLOSURE

An object of the present disclosure is to provide a distributor valve body, a combination for a distributor valve, and methods for replacing and modernizing a distributor valve, which enhance the operational safety of the associated vacuum filter.

The objects of the disclosure are achieved by a distributor valve body, a combination for a distributor valve, and methods for replacing and modernizing a distributor valve, which are characterized by what is stated in the independent claims.

The preferred embodiments of the disclosure are disclosed in the dependent claims. The disclosure is based on the idea of providing a distributor valve body which at least partially nests the distributor end of the filter shaft. The operational safety of the associated vacuum filter is thereby enhanced in multiple ways, as discussed below.

Firstly, the distributor valve body according the present disclosure partially covers the distributor end of the rotating filter shaft, thus making the rotating components less accessible during operation. As all moving parts pose a potential health risk, this enhances the operational safety of the associated vacuum filter by partially covering the moving filter shaft.

Moreover, as the distributor valve body partially covers the filter shaft, the distributor valve body necessarily opens towards the filter shaft. That is to say, the chamber of the distributor valve body opens towards a direction away from any operating or maintenance personnel in the vicinity of the distributor valve. This, in turn, makes it more difficult for any objects to get stuck in between the stationary valve chamber body and the rotating filter shaft. As a further advantage, any leakage from between the stationary valve chamber body and the rotating filter shaft, possibly resulting in high-velocity jets or harmful substances contaminating the surroundings are directed towards the filter shaft, away from any personnel.

Further advantages are discussed in more detail in the following description

### BRIEF DESCRIPTION OF THE DRAWINGS

In the following, the disclosure will be described in greater detail by means of preferred embodiments with reference to the accompanying drawings, in which
Fig. 1A illustrates a perspective view of a distributor valve body according to an embodiment of the disclosure as seen from a chamber side of the distributor valve body
Fig. 1B illustrates a perspective view of the distributor valve body of Fig. 1A as seen from an opposite side.
Fig. 1C illustrates a cut view of the distributor valve body of Figs 1A and 1B
Fig. 2A illustrates a side view of a combination for a distributor valve of a vacuum filter according to an embodiment of the disclosure.
Fig. 2B illustrates a cut view of the combination for a distributor valve of a vacuum filter of Fig. 2A.
Fig. 3 illustrates a perspective exploded view of a combination for a distributor valve of a vacuum filter according to an embodiment of the disclosure.

### DETAILED DESCRIPTION OF THE DISCLOSURE

According to a first aspect of the present disclosure, a distributor valve body 1 for a vacuum filter is provided. Preferably, the vacuum filter is of the rotating type, i.e. it comprises a rotating filter body divided into segments formed by separate filter elements and rotating about a filter shaft. Each filter element is, during a part of its rotation cycle, is at least partially submerged in, or otherwise brought into contact with the slurry to be filtered. Moreover, the filter elements are in fluid communication with an end surface of the filter shaft via respective conduits. Such rotating filter are well-known in the art, and examples of such rotating filter include disc filters and drum filters.

The distributor valve body 1 comprises a valve chamber 2 for receiving a distributor end 11 of a filter shaft 10. Most suitably, the valve chamber 2 and the distributor end 11 of a filter shaft 10 are arranged to have respectively corresponding shapes allowing the distributor end 11 to be at least partially nested within the valve chamber 2 and to operationally cooperate with each other. Moreover, most suitably both the valve chamber 2 and the distributor end 11 both have rotationally symmetrical shapes. For example, the valve chamber 2 and the distributor end 11 may be of a cylindrical, conical, frusto-conical or semi-spherical shape.

The valve chamber 2 has a base surface 3, when in use, arranged to cooperate with a face surface 12 on a distributor end 11 of said filter shaft 10, so as to form a sealing interface therewith. Most suitably, also the base surface 3 and the face surface 12 have respectively corresponding shapes and are concentric with the filter shaft 10. For example, the base surface 3 and the face surface 12 may be planar surfaces, in which case they would be transversal with respect to the filter shaft 10. Alternatively, they could be rotationally symmetrically inclined or curved with respect to the filter shaft 10, resulting in (frusto-)conical or semi-spherical arrangements, respectively.

The valve chamber 2 further comprises a circumferential rim surface 4, when in use, concentric with said filter shaft 10, for cooperating with a circumference 13 of the distributor end 11 of a filter shaft 10, so as to form a circumferential interface therewith. The circumferential rim surface 4 extends from the base surface 3, when in use, towards the distributor end 11 of a filter shaft 10 so as to at least partially cover said distributor end 11.

In a further embodiment of the first aspect of the present disclosure, the base surface 3 of the valve chamber 2 comprises a first recess 3a extending along a first sector. The first recess 3a is in fluid communication with a first valve port 5a for, when in use, applying a vacuum in order to receive filtrate from a portion of the face surface 12 on a distributor end 11 of the filter shaft 10 opposing said first recess 3a. When in use, the first recess 3a is most suitably positioned on the base surface 3, and the valve body 1 is positioned with respect to the filter shaft 10 such that the portion of the face surface 12 opposing the first recess 3a is connected to a conduit in the filter shaft 10 associated with a filter element of the filter body submerged in, or otherwise brought into contact with the slurry to be filtered during its given rotational position. Preferably, but not necessarily, the first recess 3a is provided as an annular groove. Naturally, the first recess 3a may be implement in other different forms and shapes.

The base surface 3 of the valve chamber 2 further comprises a sealing fluid recess 3d in fluid communication with a valve port 5b; 5d for, when in use, providing a sealing fluid to the sealing interface between the base surface 3 and the face surface 12 on the distributor end 11, so as to prevent fluid communication between the first recess 3a and a portion of the face surface 12 on the distributor end 11 of the filter shaft 10 not opposing said first recess. Preferably, but not necessarily, water or filtrate is used as the sealing fluid. Preferably, but not necessarily, the sealing fluid recess is provided as a recess on the central region of the base surface 3.

In still a further embodiment of the first aspect of the present disclosure, the base surface 3 of the valve chamber 2 further comprises a second recess 3b extending along a second sector for, when in use, providing backwash fluid to a portion of the face surface 12 on the distributor end 11 of the filter shaft 10 opposing said second recess 3b. The backwash fluid may be a fluid flow for cleaning the pores of the filter elements, particularly in the case of capillary filter. Alternatively, the backwash fluid may be or a fluid flow for detaching the solids cake from the filter element, such as a fluid pressure impact, particularly in the case of cloth filters. The second recess 3b is in fluid communication with a second valve port 5b. Particularly in connection with capillary filters, when in use, the second recess 3b is most suitably positioned on the base surface 3, and the valve body 1 is positioned with respect to the filter shaft 10 such that the portion of the face surface 12 opposing the second recess 3b is connected to a conduit in the filter shaft 10 associated with a filter element of the filter body from which a solids cake has been removed and which is about to be submerged in, or otherwise about to be brought into contact with the slurry during its given rotational position. Alternatively, particularly in connection with cloth filters, the second recess 3b is most suitably positioned on the base surface 3, and the valve body 1 is positioned with respect to the filter shaft 10 such that, when in use, the portion of the face surface 12 opposing the second recess 3b is connected to a conduit in the filter shaft 10 associated with a filter element of the filter body from which a solids is removed by providing a fluid pressure impact in an outwardly direction from the filter element, and which is about to be submerged in, or otherwise about to be brought into contact with the slurry during its given rotational position. Preferably, but not necessarily, the second recess 3b is provided as an annular groove. Naturally, the second recess 3b may be implement in other different forms and shapes.

Moreover, the sealing fluid recess 3d, being in fluid connection with a valve port 5b; 5d for providing sealing fluid to the sealing interface between the base surface 3 and the face surface 12 on the distributor end 11, is additionally arranged so as to prevent, when in use, fluid communication between the second recess 3b and a portion of the face surface 12 on the distributor end 11 of the filter shaft 10 not opposing said second recess 3b.

In another embodiment of the first aspect of the present disclosure, the sealing fluid recess 3d is in fluid communication with the second valve port 5b, in which case the same fluid can be used as the backwash fluid and the sealing fluid, thus removing the need for an additional separate valve port. Alternatively, the sealing fluid recess 3d can be in fluid communication with a dedicated sealing fluid inlet port 5d, in which enables the use of different fluids for the sealing fluid and the backwash fluid. This is particularly advantageous in application where harmful substances, such as acids, basics or solvents, are used to refurbish the filter body after certain operation intervals. Moreover, the sealing fluid recess 3d can be in fluid communication with the second valve port 5b and with a dedicated sealing fluid inlet port 5d, enabling the port used for feeding sealing fluid to be chosen according to the application by plugging either port, for example during installation.

In yet another embodiment of the first aspect of the present disclosure, the fluid communication between the dedicated sealing fluid port 5d and the sealing fluid recess 3d is blocked by a removable plug member. Preferably, but not necessarily, this is done during manufacturing of the distributor valve body by providing a wall between the sealing fluid recess 3d and the dedicated sealing fluid inlet port 5d. Particularly, such a wall member can be opened for example, by drilling a hole through it during installation. This enables the port used for feeding sealing fluid to be chosen according to the application by opening the plug member, for example during installation. Moreover, opening the plug element can be done without, or in connection with, plugging the fluid communication between the sealing fluid recess 3d and the second valve port 5b.

In a further embodiment of the first aspect of the present disclosure, the base surface 3 of the valve chamber 2 further comprises a third recess 3c extending along a third sector. The third recess 3c is in fluid communication with a valve port 5c; 5a for, when in use, applying a vacuum to a portion of the face surface 12 on the distributor end 11 of the filter shaft 10 opposing said third recess 3c in order to induce an airflow through a filter cake for drying said filter cake.

When in use, the third recess 3c is most suitably positioned on the base surface 3, and the valve body 1 is positioned with respect to the filter shaft 10 such that the portion of the face surface 12 opposing the third recess 3c is connected to a conduit in the filter shaft 10 associated with a filter element of the filter body which is no longer submerged in or otherwise brought out of contact with the slurry, but form which the solids cake has not yet been removed. Preferably, but not necessarily, the third recess 3c is provided as an annular groove. Naturally, the third recess 3c may be implement in other different forms and shapes.

Moreover, the sealing fluid recess 3b, being in fluid connection with a valve port 5b; 5d for providing a sealing fluid to the sealing interface between the base surface 3 and the face surface 12 on the distributor 11 end of the filter shaft 10, is additionally arranged so as to prevent, when in use, fluid communication between the third recess 3c and a portion of the face surface 12 on the distributor 11 end of the filter shaft 10 not opposing said third recess 3c.

The third recess may be in fluid communication with the first valve port 5a, in which case the same valve port 5a may be used for providing a vacuum for both the first recess 3a and the third recess 3c, thus eliminating the need for a separate valve port for the third recess 3c. Alternatively, the third recess 3c may be in fluid communication with a dedicated third valve port 5c, in which case a vacuum of a different pressure level than that provided for the first recess 3a may be provided for the third recess 3c.

Moreover, the third recess may be in fluid communication with both the first valve port 5a and a dedicated third valve port 5c, in which case the valve port 5a, 5c used for providing a vacuum for the third recess 3c may be chosen, for example during installation, by plugging the fluid communication between the third recess and either the first valve port 5a or the dedicated third valve port 5c.

The fluid communication between the dedicated third valve port 5c and the third recess 3c may be blocked by a respective removable plug member. Preferably, but not necessarily, this is done during manufacturing of the distributor valve body by providing a wall between the third recess 3d and the dedicated third valve port 5c. Particularly, such a wall member can be opened for example, by drilling a hole thought it during installation. This enables the valve port used for providing a vacuum to the third recess 3c to be chosen according to the application by opening the plug member, for example during installation. Moreover, opening the plug element can be done without, or in connection with, plugging the fluid communication between the third recess 3c and the first valve port 5a.

In still a further embodiment of the first aspect of the present disclosure, the sealing fluid recess 3d extends to a circumferential corner between the base surface 3 and the circumferential rim surface 4 so as to provide, when in use, fluid communication for the sealing fluid to the circumferential rim surface 4. In such an arrangement, the sealing fluid additionally provides cooling and lubrication for the circumferential interface between the circumferential rim surface 4 of the valve chamber 2 and the circumference 13 of the distributor end 11 of a filter shaft 10.

In another embodiment of the first aspect of the present disclosure, the valve chamber 2 further comprises, at a distal portion of the circumferential rim surface 4, an annular sealing element 6. In this context, the distal portion of the rim surface means the portion of the rim surface being at a distance from the base surface 3. This prevents, when in use, sealing fluid from leaking out via the circumferential interface between the circumferential rim surface 4 and the circumference 13 of the distribution end 11 of a filter shaft 10.

The annular sealing element 6 may be provided as a circumferential, inwardly extending protrusion on the rim surface 4 of the valve chamber 2. That is to say, the sealing element maybe an integral part of the rim surface formed thereon during manufacturing of the valve body 1. Such an arrangement ensures, that the sealing element is renewed each time the valve body 1 is replaced. As the sealing element 6 is maintained in good condition, the risk of leakage, possibly resulting in high-velocity spray or contamination of harmful substances to the surroundings, is reduced, thus contributing to enhancing the operational safety of the associated vacuum filter.

Alternatively, the annular sealing element 6 may be provided a separate annular seal arranged in a circumferential groove on the rim surface 4. For example, an annular lip seal may be used. This enables the seal member 6 to be replaced separately from the valve body 1, which is advantageous in application where the wear of the seal is particularly fast. As the sealing element 6 is maintained in good condition, the risk of leakage, possibly resulting in high-velocity spray or contamination of harmful substances to the surroundings, is reduced, thus contributing to enhancing the operational safety of the associated vacuum filter. As a further alternative, the sealing element may be arranged on the circumference 13 of the distributor end 11 of the filter shaft 10. It should be understood, that the features of the different embodiments of the first aspect of the present disclosure may be combined with each other.

According to a second aspect of the present disclosure, a combination for a distributor valve of a vacuum filter is provided. The combination comprises the distributor valve body 1 as discussed above in connection with any of the embodiments according to the first aspect of the present disclosure. The combination further comprises an adaptor piece 14, when in use, attachable to a filter shaft 10 of a vacuum filter so as to function as a distributor end 11, said adaptor piece 14 having openings corresponding to filtrate conduits on said filter shaft. Moreover, the adaptor piece 14 is arranged, when in use, to be receivable within the valve chamber 2 of the distributor valve body 1 so as to selectively provide fluid communication between the recesses 3a, 3b, 3c on the base surface 3 of the distributor valve chamber 2 and filtrate conduits on the filter shaft. Such an adaptor piece enables a distributor valve body 1 of a single type to be operationally attachable to filter shafts of different types and dimensions simply by using an adaptor piece matching the filter shaft 10. In this way, the combination enables the distributor valve body 1 to be used with various vacuum filters, thus enhancing the operation safety thereof, as discussed above in connection with the embodiments of the first aspect of the present disclosure. It should be noted, that for the functioning of the vacuum filter, the adaptor piece 14 is not necessary if the filter shaft 10 is compatible with the distributor valve body 1. Particularly, if an adaptor piece 14 is not used, the filter shaft 10 may form distributor end 11 and the end surface 12.

In a further embodiment of the second aspect of the present disclosure, the combination further comprises a timing plate 15, when in use, attachable to the adaptor piece 14, and having openings corresponding with those of the adaptor piece 14. The timing plate 15 is arranged, when in use, to be receivable within the valve chamber 2 of the distributor valve body 1 so as to cooperate therewith by forming the face surface 12 on the distributor end 11 of the filter shaft 10. The timing plate 15 comprises an annular array of openings formed to enable a smooth transition for opening and closing of the fluid communication between the recesses 3a, 3b, 3c on the base surface 3 of the distributor valve body 1 and the conduits in the filter shaft 10. Preferably, but not necessarily, the annular array of slots may be provided as an annular array of radially inclined slots. It should be noted, that for the functioning of the vacuum filter, the timing plate is not necessary if the adaptor piece 14 or the filter shaft 10 is compatible with the distributor valve body 1. Particularly, if a timing plate 15 is not used, the adaptor piece 14 or the filter shaft 10 may form the end surface 12.

In still a further embodiment of the first aspect of the present disclosure, the combination additionally comprises a fixture 20 for, when in use, attaching the distributor valve body 1 to a fixed structure of the vacuum filter. The fixture 20 comprises biasing means 21 for, when in use, biasing the distributor valve body 1 towards the filter shaft 10 of the vacuum filter, such that the base surface 3 of the distributor valve chamber 2 is pushed against the face surface 12 on the distributor end 11 of the filter shaft 10. The purpose of the fixture 20 is to maintain the valve body 1 stationary with respect to the filter shaft 10, while biasing the base surface 3 against to face surface 12 in order to ensure a proper sealing interface therebetween. As for the biasing member, any conventional means may be used. For example, the biasing member may be implemented as one or more hydraulic or pneumatic cylinders, or mechanically resilient members such as springs or elastomer pads. According a third aspect of the present disclosure, a vacuum filter is provided. The vacuum filter comprises filter elements connected to a filter shaft 10, wherein filtrate conduits extend between filter elements and a distributor end 11 of the filter shaft 10. Moreover, the vacuum filter comprises a combination according to any embodiment of the second aspect of the present disclosure, as discussed above, arranged to be in use.

According to a fourth aspect of the present disclosure, a method for replacing a distributor valve body 1 of a vacuum filter according to any embodiment of the third aspect of the present disclosure, as discussed above. In the method, a first distributor valve body 1, preferably an old, worn or a broken distributor valve body 1, is to be replaced by a second distributor valve body 1, preferably a new or a refurbished distributor valve body 1.

The method comprises detaching the fixture 20, along with a first distributor valve body 1, from a fixed structure of the vacuum filter. It should be noted, that this step includes detaching any tubing or piping, particularly from the valve ports 3a, 3b, 3c, 3d of the distributor valve body 1.

Moreover, the first distributor valve body 1 is detached from the fixture 20, and a second distributor valve body 1 is attached to the fixture 20.

Thereafter, attaching the fixture 20, along with the second distributor valve body 1, to the fixed structure of the vacuum filter. It should be noted, that this step includes attaching any tubing or piping, particularly to the valve ports 3a, 3b, 3c, 3d of the distributor valve body 1.

The above is carried out such that the combination for a distributor valve is arranged to be in use.

According to a fifth aspect of the present disclosure, a method for modernizing a distributor valve of a vacuum filter, is provided. In the method, a vacuum filter equipped with a conventional distributor valve is equipped with a distributor valve having a distributor valve body 1 according to the present disclosure.

The method comprises removing a pre-existent distributor valve. It should be noted that this step may include detaching any tubing or piping, particularly from the valve ports 3a, 3b, 3c, 3d of the distributor valve body 1. Moreover, this step may include removing an adaptor piece, a timing plate, or both, if they are not operationally compatible with the distributor valve body 1 with which the pre-existing distributor valve body is to be replaced. The method further comprises providing a combination for a distributor valve of a vacuum filter according to any embodiment of the second aspect of the present disclosure, as discussed above, wherein said combination for a distributor valve is attached to the vacuum filter as arranged to be in use. It should be noted that this step may included detaching any tubing or piping, particularly from the valve ports 3a, 3b, 3c, 3d of the distributor valve body 1.

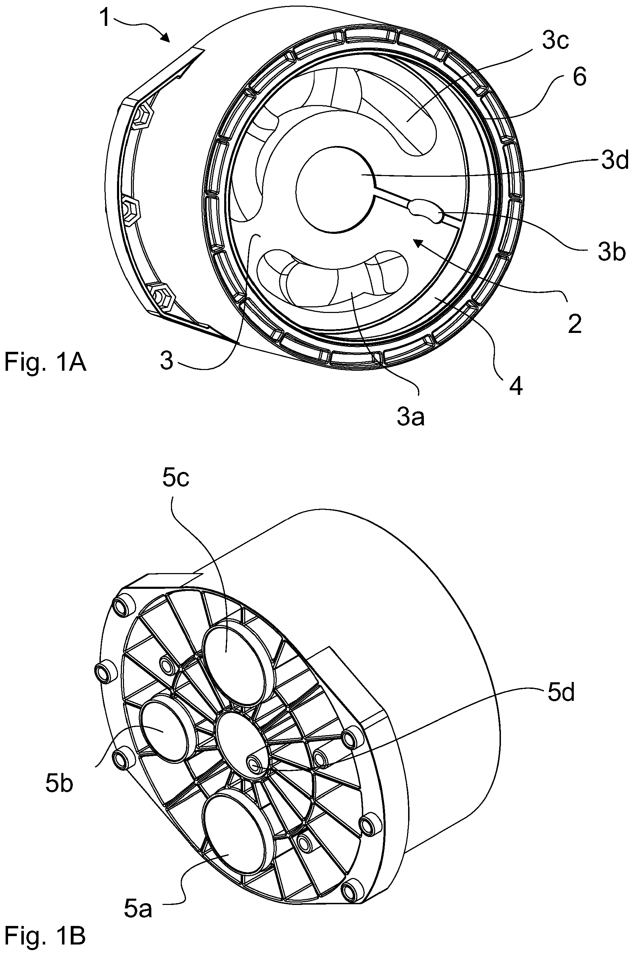

Fig. 1A illustrates a distributor valve body 1 according to an embodiment of the disclosure. The distributor valve body 1 comprises an essentially cylindrical valve chamber 2 for receiving a distributor end 11 of a filter shaft. At a bottom of the valve chamber 2, there is a planar base surface 3 having multiple recesses 3a, 3b, 3c, 3d therein. Particularly, there is a first recess 3a provided as annular groove being in fluid communication with a first valve port 5a located on the back side of the distributor valve body 1. A second recess 3b is also provided on the base surface 3 as a radially extending curved groove. The second recess 3b is in fluid communication with a second valve port 5b located on the back side of the distributor valve body 1. A third recess 3c is also provided on the base surface 3 as an annular groove being in fluid communication with a third valve port 5b located on the back side of the distributor valve body 1.

Furthermore, a sealing fluid recess 3d is provided on the base surface 3 as a circular recess, from which a groove extends radially up to a corner between the base surface 3 and an circumferential rim surface 4 of the valve chamber 2. The radially extending groove runs over the second recess 3b, which enables a backwash fluid from the second valve port 5b also to be used as the sealing fluid.

In the arrangement of Fig. 1A also an annular sealing element 6 is provided on the circumferential rim surface 4.

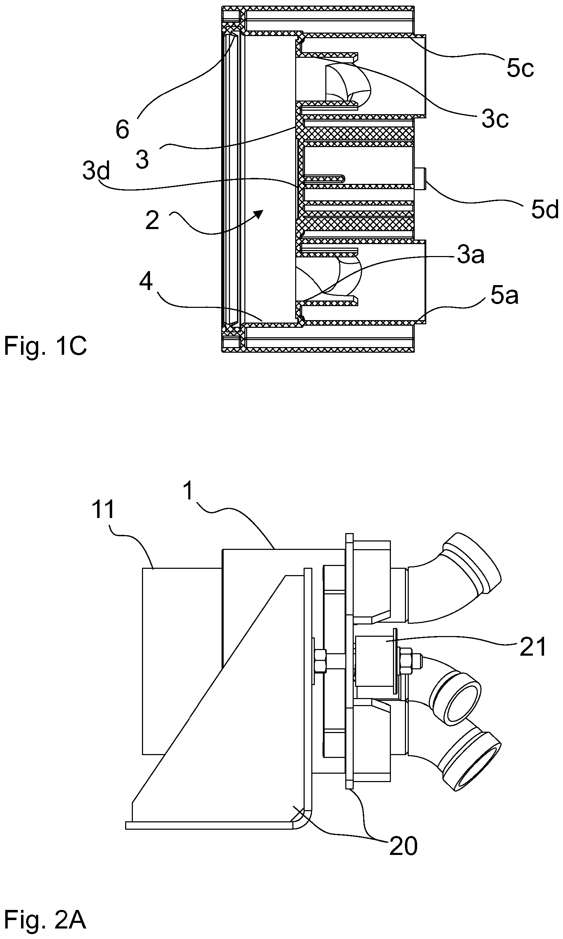

Fig. 1B illustrates the distributor valve body of Fig. 1A as seen from the back side. Particularly, valve ports 5a, 5b, 5c and 5d can be better seen. Moreover, two lateral flanges extend radially in opposite directions from the outer surface of the distributor valve body 1. On the back side of the flanges, protruding studs having holes are provided. The purpose of the flanges is to enable attaching the distributor valve body to a fixture. Particularly the flanges act as torque stays facilitating keeping the distributor valve body stationary with respect to the rotating filter shaft. Moreover, Fig. 1B illustrates the comb-like construction of the distributor valve body 1, increasing the rigidness of the otherwise shell-like structure. Such an arrangement can be achieved, for example, with injection moulding or additive manufacturing, such as 3D-printing. Fig. 1C illustrates a cut view of the distributor valve body 1 of Fig 1A as seen from the side.

Fig. 2A illustrates a side view of a combination for a distributor valve, in which combination a 1 distributor valve body is attached to a fixture 20. Moreover, in the situation of Fig. 2A, the distributor valve body 1 nests a part of the distributor end 11 of the filter shaft (not shown in Fig. 2A). The fixture 20 comprises a plate attached to the back side of the distributor valve body 1 and the plate being further attached to a bracket with biasing means 2, thus causing the distributor valve body 1 to be pushed towards the distributor end 11.

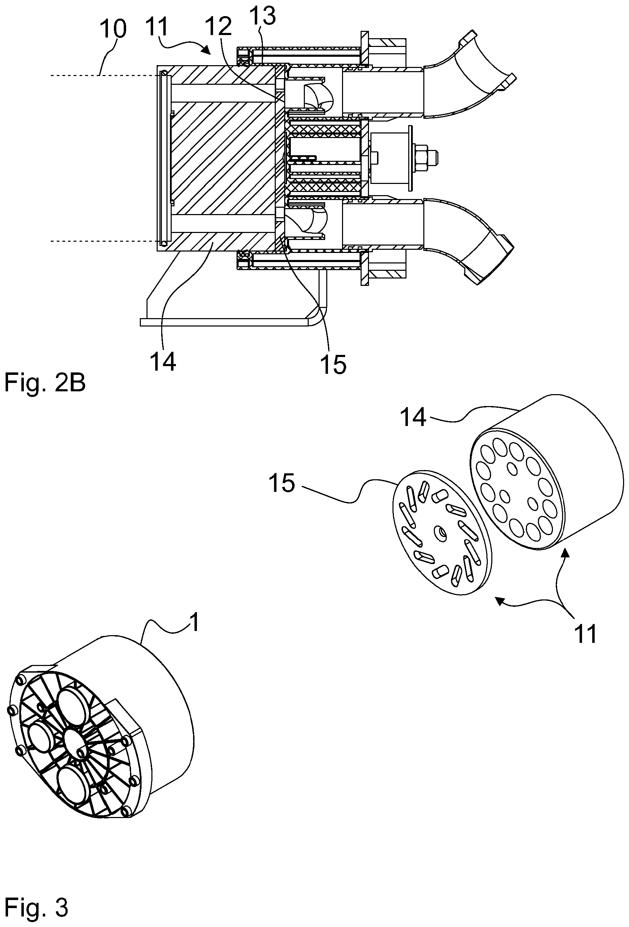

Fig.2B illustrates the situation of Fig. 2A as cut view. Particularly, the distributor end 11 of the filter shaft 10 is formed by an adaptor piece 14, onto which a timing pate 15 is attached. In this arrangement, the face surface of the distributor end 11 is formed by the timing plate 15. Moreover, the distributor end 11 is partially received within the valve chamber 2 of the distributor valve body 1.

Fig. 3, in turn, illustrates the distributor valve body 1 and the distributor end 11 formed by the adaptor piece 14 and the timing plate 15 as an exploded view. Particularly, the timing plate 15 has an annular array of radially inclined grooves corresponding to an annular array of openings on the adaptor piece 14. Moreover, the openings on the adaptor piece 14 correspond to conduits on the filter shaft 10, each of which run up to their respective filter element.

## Claims

1. A distributor valve body (1) for a vacuum filter, said distributor valve body comprising a valve chamber (2) for receiving a distributor end (11) of a filter shaft (10), said valve chamber (2) having:
- a base surface (3) arranged to cooperate with a face surface (12) on a distributor end (11) of said filter shaft (10), so as to form a sealing interface therewith, and
- a circumferential rim surface (4) concentric with said filter shaft (10), for cooperating with a circumference (13) of the distributor end (11) of a filter shaft (10), so as to form a circumferential interface therewith,
wherein the base surface (3) of the valve chamber (2) comprises:
- a first recess (3a) extending along a first sector, said first recess being in fluid communication with a first valve port (5a) for applying a vacuum in order to receive filtrate from a portion of the face surface (12) on a distributor end (11) of the filter shaft (10) opposing said first recess, and
- a sealing fluid recess (3d) in fluid communication with a valve port (5b; 5d) for providing a sealing fluid to the sealing interface between the base surface (3) and the face surface (12) on the distributor end (11), so as to prevent fluid communication between the first recess (3a) and a portion of the face surface (12) on the distributor end (11) of the filter shaft (10) not opposing said first recess,
**characterized in that** the circumferential rim surface (4) extends from the base surface (3) towards the distributor end (11) of a filter shaft (10) so as to at least partially cover said distributor end (11).

2. The distributor valve body (1) according to Claim 1, wherein the base surface (3) of the valve chamber (2) further comprises:
- a second recess (3b) extending along a second sector for providing backwash fluid to a portion of the face surface (12) on the distributor end (11) of the filter shaft (10) opposing said second recess (3b), said second recess (3b) being in fluid communication with a second valve port (5b),
wherein the sealing fluid recess (3d), being in fluid connection with a valve port (5b; 5d) for providing a sealing fluid to the sealing interface between the base surface (3) and the face surface (12) on the distributor end (11), is additionally arranged so as to prevent fluid communication between the second recess (3b) and a portion of the face surface (12) on the distributor end (11) of the filter shaft (10) not opposing said second recess (3b).

3. The distributor valve body (1) according to Claim 2, wherein the sealing fluid recess (3d) is in fluid communication with the second valve port (5b), a dedicated sealing fluid inlet port (5d), or both.

4. The distributor valve body (1) according to Claim 3, wherein the fluid communication between the dedicated sealing fluid port (5d) and the sealing fluid recess (3d) is blocked by a removable plug member

5. The distributor valve body (1) according to any of the preceding Claims-1 - 4, wherein the base surface (3) of the valve chamber (2) further comprises:
- a third recess (3c) extending along a third sector, said third recess being in fluid communication with a valve port (5c; 5a) for applying a vacuum to a portion of the face surface (12) on the distributor end (11) of the filter shaft (10) opposing said third recess (3c) in order to induce an airflow through a filter cake for drying said filter cake,
wherein the sealing fluid recess (3b), being in fluid connection with a valve port (5b; 5d) for providing a sealing fluid to the sealing interface between the base surface (3) and the face surface (12) on the distributor (11), is additionally arranged so as to prevent fluid communication between the third recess (3c) and a portion of the face surface (12) on the distributor (11) end of the filter shaft (10) not opposing said third recess (3c).

6. The distributor valve body (1) according to Claim 5, wherein the third recess is in fluid communication with the first valve port (5a), a dedicated third valve port (5c), or both.

7. The distributor valve body (1) according to any of the preceding Claims-1 - 6, wherein the sealing fluid recess (3d) extends to a circumferential corner between the base surface (3) and the circumferential rim surface (4) so as to provide fluid communication for the sealing fluid to the circumferential rim surface (4),
whereby said sealing fluid additionally provides cooling and lubrication for the circumferential interface between the circumferential rim surface (4) of the valve chamber (2) and the circumference (13) of the distributor end (11) of a filter shaft (10).

8. The distributor valve body (1) according to any of the preceding Claims, wherein the valve chamber (2) further comprises, at a distal portion of the circumferential rim surface (4), an annular sealing element (6) for preventing sealing fluid from leaking out via the circumferential interface between the circumferential rim surface (4) and the circumference (13) of the distributor end (11) of a filter shaft (10).

9. The distributor valve body (1) according to Claim 8, wherein the annular sealing element (6) is provided as a circumferential, inwardly extending protrusion on the rim surface (4) of the valve chamber (2).

10. The distributor valve body (1) according to Claim 8, wherein the annular sealing element (6) is provided as an annular lip seal arranged in a circumferential groove on the rim surface (4).

11. A combination for a distributor valve of a vacuum filter, **characterized by** comprising
- the distributor valve body (1) according to any of the preceding Claims, and
- an adaptor piece (14) attachable to a filter shaft (10) of a vacuum filter so as to function as a distributor end (11), said adaptor piece (14) having openings corresponding to filtrate conduits on said filter shaft,
wherein the adaptor piece (14) is arranged to be receivable within the valve chamber (2) of the distributor valve body (1) so as to selectively provide fluid communication between the recesses (3a, 3b, 3c) on the base surface (3) of the distributor valve chamber (2) and filtrate conduits on the filter shaft.

12. The combination for a distributor valve of a vacuum filter according to Claim 11, wherein the combination further comprises:
- a timing plate (15) attachable to the adaptor piece (14), and having openings corresponding with those of the adaptor piece (14),
wherein the timing plate (15) is arranged to be receivable within the valve chamber (2) of the distributor valve body (1) so as to cooperate therewith by forming the face surface (12) on the distributor end (11) of the filter shaft (10).

13. The combination for a distributor valve of a rotational vacuum filter according to Claim 11 or 12, wherein the combination further comprises:
- a fixture (20) for attaching the distributor valve body (1) to a fixed structure of the vacuum filter,
wherein the fixture (20) comprises biasing means (21) for biasing the distributor valve body (1), towards the filter shaft (10) of the vacuum filter, such that the base surface (3) of the distributor valve chamber (2) is pushed against the face surface (12) on the distributor end (11) of the filter shaft (10).

14. A vacuum filter, having filter elements connected to a filter shaft (10), wherein filtrate conduits extend between filter elements and a distributor end (11) of the filter shaft (10), **characterized by** comprising the combination for a distributor valve of a vacuum filter according to any of the Claims-11 - 13.

15. A method for replacing a distributor valve body (1) of a vacuum filter according to Claim 14 equipped with a combination for a distributor valve according to Claim 13 **characterized by**:
- detaching the fixture (20), along with a first distributor valve body (1), from a fixed structure of the vacuum filter;
- detaching the first distributor valve body (1) form the fixture (20);
- attaching a second distributor valve body (1) to the fixture (20);
- attaching the fixture (20), along with the second distributor valve body (1), to the fixed structure of the vacuum filter.

16. A method for modernizing a distributor valve of a rotational vacuum filter, comprising the steps of:
- removing a pre-existent distributor valve,
**characterized by**
- providing a combination for a distributor valve of a vacuum filter according to any of the Claims 11 - 13,
wherein said combination for a distributor valve is attached to the vacuum filter.

## Patentansprüche

1. Verteilerventilkörper (1) für einen Vakuumfilter, wobei das Verteilerventilkörper eine Ventilkammer (2) zur Aufnahme eines Verteilerendes (11) einer Filterwelle (10) umfasst, wobei die Ventilkammer (2) aufweist:
- eine Grundfläche (3), die dazu eingerichtet ist, mit einer Stirnfläche (12) an einem Verteilerende (11) der Filterwelle (10) zusammenzuwirken, um dazwischen eine Dichtungsgrenzfläche auszubilden, und
- eine zur Filterwelle (10) konzentrische umlaufende Randfläche (4) zum Zusammenwirken mit einem Umfang (13) des Verteilerendes (11) einer Filterwelle (10), um dazwischen eine Umfangsgrenzfläche auszubilden,
wobei die Grundfläche (3) der Ventilkammer (2) umfasst:
- eine sich in einem ersten Sektor erstreckende erste Ausnehmung (3a), wobei die erste Ausnehmung fluidtechnisch mit einer ersten Ventilöffnung (5a) zum Anlegen eines Vakuums verbunden ist, um Filtrat aus einem der ersten Ausnehmung gegenüberliegenden Abschnitt der Stirnfläche (12) an einem Verteilerende (11) der Filterwelle (10) zu empfangen, und
- eine Dichtfluidausnehmung (3d) in fluidtechnischer Verbindung mit einer Ventilöffnung (5b, 5d) zum Zuführen eines Dichtfluids zur Dichtungsgrenzfläche zwischen der Grundfläche (3) und der Stirnfläche (12) am Verteilerende (11), um eine fluidtechnische Verbindung zwischen der ersten Ausnehmung (3a) und einem der ersten Ausnehmung nicht gegenüberliegenden Abschnitt der Stirnfläche (12) am Verteilerende (11) der Filterwelle (10) zu verhindern,
**dadurch gekennzeichnet, dass** sich die umlaufende Randfläche (4) ausgehend von der Grundfläche (3) in Richtung des Verteilerendes (11) einer Filterwelle (10) erstreckt, um das Verteilerende (11) mindestens teilweise umzudecken.

2. Verteilerventilkörper (1) nach Anspruch 1, wobei die Grundfläche (3) der Ventilkammer (2) ferner umfasst:
- eine sich in einem zweiten Sektor erstreckende zweite Ausnehmung (3b) zum Zuführen eines Rückwaschfluids zu einem der zweiten Ausnehmung (3b) gegenüberliegenden Abschnitt der Stirnfläche (12) am Verteilerende (11) der Filterwelle (10), wobei die zweite Ausnehmung (3b) fluidtechnisch mit einer zweiten Ventilöffnung (5b) verbunden ist,
wobei die Dichtfluidausnehmung (3d), die fluidtechnisch mit einer Ventilöffnung (5b; 5d) zum Zuführen eines Dichtfluids zur Dichtungsgrenzfläche zwischen der Grundfläche (3) und der Stirnfläche (12) am Verteilerende (11) verbunden ist, außerdem dazu eingerichtet ist, eine fluidtechnische Verbindung zwischen der zweiten Ausnehmung (3b) und einem der zweiten Ausnehmung (3b) nicht gegenüberliegenden Abschnitt der Stirnfläche (12) am Verteilerende (11) der Filterwelle (10) zu verhindern.

3. Verteilerventilkörper (1) nach Anspruch 2, wobei die Dichtfluidausnehmung (3d) fluidtechnisch mit der zweiten Ventilöffnung (5b), einer speziell vorgesehenen Dichtfluid-Einlassöffnung (5d), oder beiden, verbunden ist.

4. Verteilerventilkörper (1) nach Anspruch 3, wobei die fluidtechnische Verbindung zwischen der speziell vorgesehenen Dichtfluidöffnung (5d) und der Dichtfluidausnehmung (3d) durch ein entfernbares Absperrelement blockiert ist.

5. Verteilerventilkörper (1) nach einem der vorhergehenden Ansprüche 1 bis 4, wobei die Grundfläche (3) der Ventilkammer (2) ferner umfasst:
- eine sich in einem dritten Sektor erstreckende dritte Ausnehmung (3c), wobei die dritte Ausnehmung fluidtechnisch mit einer Ventilöffnung (5c; 5a) verbunden ist, um ein Vakuum an einen der dritten Ausnehmung (3c) gegenüberliegenden Abschnitt der Stirnfläche (12) am Verteilerende (11) der Filterwelle (10) anzulegen, um einen Luftstrom durch einen Filterkuchen zum Trocknen des Filterkuchens zu induzieren,
wobei die Dichtfluidausnehmung (3d), die fluidtechnisch mit einer Ventilöffnung (5b, 5d) zum Zuführen eines Dichtfluids zur Dichtungsgrenzfläche zwischen der Grundfläche (3) und der Stirnfläche (12) am Verteiler (11) verbunden ist, außerdem dazu eingerichtet ist, eine fluidtechnische Verbindung zwischen der dritten Ausnehmung (3c) und einem der dritten Ausnehmung (3c) nicht gegenüberliegenden Abschnitt der Stirnfläche (12) am Verteilerende (11) der Filterwelle (10) zu verhindern.

6. Verteilerventilkörper (1) nach Anspruch 5, wobei die dritte Ausnehmung fluidtechnisch mit der ersten Ventilöffnung (5a), einer speziell vorgesehenen dritten Ventilöffnung (5c), oder beiden, verbunden ist.

7. Verteilerventilkörper (1) nach einem der vorhergehenden Ansprüche 1 bis 6, wobei sich die Dichtfluidausnehmung (3d) bis zu einer Umfangsecke zwischen der Grundfläche (3) und der umlaufenden Randfläche (4) erstreckt, um für das Dichtfluid eine fluidtechnische Verbindung zur umlaufenden Randfläche (4) bereitzustellen, wodurch das Dichtfluid zusätzlich eine Kühlung und Schmierung für die Umfangsgrenzfläche zwischen der umlaufenden Randfläche (4) der Ventilkammer (2) und dem Umfang (13) des Verteilerendes (11) einer Filterwelle (10) bereitstellt.

8. Verteilerventilkörper (1) nach einem der vorhergehenden Ansprüche, wobei die Ventilkammer (2) ferner an einem fernen Abschnitt der umlaufenden Randfläche (4) ein ringförmiges Dichtelement (6) umfasst, um zu verhindern, dass das Dichtfluid über die Umgebungsgrenzfläche zwischen der umlaufenden Randfläche (4) und dem Umfang (13) des Verteilerendes (11) einer Filterwelle (10) austritt.

9. Verteilerventilkörper (1) nach Anspruch 8, wobei das ringförmige Dichtelement (6) als umlaufender, nach innen verlaufender Vorsprung an der Randfläche (4) der Ventilkammer (2) vorgesehen ist.

10. Verteilerventilkörper (1) nach Anspruch 8, wobei das ringförmige Dichtelement (6) als eine in einer umlaufenden Nut an der Randfläche (4) angeordnete ringförmige Lippendichtung vorgesehen ist.

11. Kombination für ein Verteilerventil eines Vakuumfilters, **dadurch gekennzeichnet, dass** sie umfasst:
- das Verteilerventilkörper (1) nach einem der vorhergehenden Ansprüche, und
- ein Adapterstück (14), das an einer Filterwelle (10) eines Vakuumfilters so anbringbar ist, dass es als Verteilerende (11) fungiert, wobei das Adapterstück (14) Öffnungen aufweist, die Filtratkanälen an der Filterwelle entspricht,
wobei das Adapterstück (14) so eingerichtet ist, dass es in die Ventilkammer (2) des Verteilerventilkörpers (1) aufgenommen werden kann, um selektiv eine fluidtechnische Verbindung zwischen den Ausnehmungen (3a, 3b, 3c) an der Grundfläche (3) der Verteilerventilkammer (2) und den Filtratkanälen an der Filterwelle bereitzustellen.

12. Kombination für ein Verteilerventil eines Vakuumfilters nach Anspruch 11, wobei die Kombination ferner umfasst:
- eine Abstimmplatte (15), die am Adapterstück (14) anbringbar ist und Öffnungen aufweist, die den Öffnungen des Adapterstücks (14) entsprechen,
wobei die Abstimmplatte (15) so eingerichtet ist, dass sie in die Ventilkammer (2) des Verteilerventilkörpers (1) aufgenommen werden kann, um mit dieser zusammenwirken, indem sie die Stirnfläche (12) am Verteilerende (11) der Filterwelle (10) bildet.

13. Kombination für ein Verteilerventil eines Vakuumdrehfilters nach Anspruch 11 oder 12, wobei die Kombination ferner umfasst:
- eine Befestigung (20) zum Anbringen des Verteilerventilkörpers (1) an einer feststehenden Struktur des Vakuumfilters,
wobei die Befestigung (20) Vorspannmittel (21) aufweist, um den Verteilerventilkörper (1) zur Filterwelle (10) des Vakuumfilters hin vorzuspannen, so dass die Grundfläche (3) der Verteilerventilkammer (2) gegen die Stirnfläche (12) am Verteilerende (11) der Filterwelle (10) gedrückt wird.

14. Vakuumfilter, der mit einer Filterwelle (10) verbundene Filterelemente aufweist, wobei sich Filtratkanäle zwischen Filterelementen und einem Verteilerende (11) der Filterwelle (10) erstrecken, **dadurch gekennzeichnet, dass** er die Kombination für ein Verteilerventil eines Vakuumfilters nach einem der Ansprüche 11 bis 13 umfasst.

15. Verfahren zum Austauschen eines Verteilerventilkörpers (1) eines Vakuumfilters nach Anspruch 14, der mit einer Kombination für ein Verteilerventil nach Anspruch 13 ausgestattet ist, **gekennzeichnet durch**:
- Lösen der Befestigung (20), zusammen mit einem ersten Verteilerventilkörper (1), von einer feststehenden Struktur des Vakuumfilters;
- Lösen des ersten Verteilerventilkörpers (1) von der Befestigung (20);
- Anbringen eines zweiten Verteilerventilkörpers (1) an der Befestigung (20);
- Anbringen der Befestigung (20), zusammen mit dem zweiten Verteilerventilkörper (1), an der feststehenden Struktur des Vakuumfilters.

16. Verfahren zur Modernisierung eines Verteilerventils eines Vakuumdrehfilters, umfassend die Schritte:
- Abnehmen eines vorher bestehenden Verteilerventils,
**gekennzeichnet durch**
- Bereitstellen einer Kombination für ein Verteilerventil eines Vakuumfilters nach einem der Ansprüche 11 bis 13,
wobei die Kombination für ein Verteilerventil am Vakuumfilter angebracht wird.

## Revendications

1. Corps de vanne de distribution (1) pour un filtre à vide, ledit corps de vanne de distribution comprenant une chambre de vanne (2) pour recevoir une extrémité distributrice (11) d'un axe de filtre (10), ladite chambre de vanne (2) comportant :
- une surface de base (3) agencée pour coopérer avec une face (12) d'une extrémité distributrice (11) de l'axe de filtre (10) afin de former une interface d'étanchéité avec celle-ci, et
- une surface périphérique circonférentielle (4) concentrique à l'axe de filtre (10) pour coopérer avec la circonférence (13) de l'extrémité distributrice (11) d'un axe de filtre (10) afin de former une interface circonférentielle avec celle-ci,
la surface de base (3) de ladite chambre de vanne (2) comprenant :
- une première échancrure (3a) s'étendant le long d'un premier secteur, ladite première échancrure étant en communication fluidique avec un premier orifice de vanne (5a) pour l'application d'un vide afin de recevoir un filtrat provenant d'une portion de la face (12) d'une extrémité distributrice (11) de l'axe de filtre (10) en position opposée à ladite première échancrure, et
- une échancrure de fluide d'étanchéité (3) en communication fluidique avec un orifice de vanne (5b, 5d) pour fournir un fluide d'étanchéité vers l'interface d'étanchéité entre la surface de base (3) et la face (12) de l'extrémité distributrice (11) afin d'empêcher une communication fluidique entre la première échancrure (3a) et une portion de la face (12) de l'extrémité distributrice (11) de l'axe de filtre (10) en position non opposée à ladite première échancrure,
**caractérisé en ce que** la surface périphérique circonférentielle (4) s'étend de la surface de base (3) vers l'extrémité distributrice (11) d'un axe de filtre (10) pour recouvrir au moins partiellement ladite extrémité distributrice (11).

2. Corps de vanne de distribution (1) selon la revendication 1, dans lequel la surface de base (3) de la chambre de vanne (2) comprend également :
- une deuxième échancrure (3b) s'étendant le long d'un deuxième secteur pour fournir un fluide de rétrolavage vers une portion de la face (12) de l'extrémité distributrice (11) de l'axe de filtre (10) en position opposée à ladite deuxième échancrure (3b), ladite deuxième échancrure (3b) étant en communication fluidique avec un deuxième orifice de vanne (5b),
ladite échancrure de fluide d'étanchéité (3d), qui est en communication fluidique avec un orifice de vanne (5b, 5d) pour fournir un fluide d'étanchéité vers l'interface d'étanchéité entre la surface de base (3) et la face (12) de l'extrémité distributrice (11), étant également agencée pour empêcher une communication fluidique entre la deuxième échancrure (3b) et une portion de la face (12) de l'extrémité distributrice (11) de l'axe de filtre (10) en position non opposée à ladite deuxième échancrure (3b).

3. Corps de vanne de distribution (1) selon la revendication 2, dans lequel l'échancrure de fluide d'étanchéité (3d) est en communication fluidique avec le deuxième orifice de vanne (5b), un orifice d'entrée de fluide d'étanchéité dédié (5d) ou les deux.

4. Corps de vanne de distribution (1) selon la revendication 3, dans lequel la communication fluidique entre l'orifice de fluide d'étanchéité dédié (5d) et l'échancrure de fluide d'étanchéité (3d) est bloquée par un élément obturateur amovible.

5. Corps de vanne de distribution (1) selon l'une des revendications précédentes 1 à 4, dans lequel la surface de base (3) de ladite chambre de vanne (2) comprend également :
- une troisième échancrure (3c) s'étendant le long d'un troisième secteur, ladite troisième échancrure étant en communication fluidique avec un orifice de vanne (5c ; 5a) pour l'application d'un vide à une portion de la face (12) de l'extrémité distributrice (11) de l'axe de filtre (10) en position opposée à ladite troisième échancrure (3c) afin d'induire un courant d'air au travers d'un gâteau de filtre pour sécher ledit gâteau de filtre,
ladite échancrure de fluide d'étanchéité (3d), qui est en communication fluidique avec un orifice de vanne (5b, 5d) pour fournir un fluide d'étanchéité vers l'interface d'étanchéité entre la surface de base (3) et la face (12) distributrice (11), étant également agencée pour empêcher une communication fluidique entre la troisième échancrure (3c) et une portion de la face (12) de l'extrémité distributrice (11) de l'axe de filtre (10) en position non opposée à la face de ladite troisième échancrure (3c).

6. Corps de vanne de distribution (1) selon la revendication 5, dans lequel la troisième échancrure est en communication fluidique avec le premier orifice de vanne (5a), un troisième orifice de vanne dédié (5c) ou les deux.

7. Corps de vanne de distribution (1) selon l'une des revendications précédentes 1 à 6, dans lequel l'échancrure de fluide d'étanchéité (3d) s'étend jusqu'à un coin circonférentiel entre la surface de base (3) et la surface périphérique circonférentielle (4) afin de fournir une communication fluidique pour le fluide d'étanchéité vers la surface périphérique circonférentielle (4),
ledit fluide d'étanchéité assurant également un refroidissement et une lubrification pour l'interface circonférentielle entre la surface périphérique circonférentielle (4) de la chambre de vanne (2) et la circonférence (13) de l'extrémité distributrice (11) d'un axe de filtre (10).

8. Corps de vanne de distribution (1) selon l'une des revendications précédentes, dans lequel la chambre de vanne (2) comprend également, à une portion distale de la surface périphérique circonférentielle (4), un élément d'étanchéité annulaire (6) pour empêcher le fluide d'étanchéité de s'échapper par l'interface circonférentielle entre la surface périphérique circonférentielle (4) et la circonférence (13) de l'extrémité distributrice (11) d'un axe de filtre (10).

9. Corps de vanne de distribution (1) selon la revendication 8, dans lequel l'élément d'étanchéité annulaire (6) est prévu sur la surface périphérique (4) de la chambre de vanne (2) en tant que saillie circonférentielle étendue vers l'intérieur.

10. Corps de vanne de distribution (1) selon la revendication 8, dans lequel l'élément d'étanchéité annulaire (6) est prévu en tant que joint à lèvre annulaire disposé dans une rainure circonférentielle dans la surface périphérique (4).

11. Combinaison pour une vanne de distribution d'un filtre à vide, **caractérisée en ce qu'**elle comprend :
- le corps de vanne de distribution (1) selon l'une des revendications précédentes, et
- un élément adaptateur (14) attachable à l'axe de filtre (10) d'un filtre à vide de manière à fonctionner comme extrémité distributrice (11), ledit élément adaptateur (14) ayant des ouvertures correspondant à des conduits de filtrat sur ledit axe de filtre,
ledit élément adaptateur (14) étant agencé de manière à être apte à être reçu dans la chambre de vanne (2) du corps de vanne de distribution (1) afin de prévoir de manière sélective une communication fluidique entre les échancrures (3a, 3b, 3c) dans la surface de base (3) de la chambre de vanne de distribution (2) et des conduits de filtrat sur l'axe de filtre.

12. Combinaison pour une vanne de distribution d'un filtre à vide selon la revendication 11, ladite combinaison comprenant également :
- une plaque de synchronisation (15) attachable à l'élément adaptateur (14) et qui présente des ouvertures correspondant à celles de l'élément adaptateur (14),
ladite plaque de synchronisation (15) étant agencée de manière à être apte à être reçue dans la chambre de vanne (2) du corps de vanne de distribution (1) afin de coopérer avec celle-ci en formant la face (12) de l'extrémité distributrice (11) de l'axe de filtre (10).

13. Combinaison pour une vanne de distribution d'un filtre rotatif à vide selon la revendication 11 ou 12, ladite combinaison comprenant également :
- un dispositif de fixation (20) pour attacher le corps de vanne de distribution (1) à une structure fixe du filtre à vide,
ledit dispositif de fixation (20) comprenant un moyen de précontrainte (21) pour précontraindre le corps de vanne de distribution (1) vers l'axe de filtre (10) du filtre à vide de telle façon que la surface de base (3) de la chambre de vanne de distribution (2) soit poussée contre l'extrémité distributrice (11) de l'axe de filtre (10).

14. Filtre à vide ayant des éléments de filtre reliés à un axe de filtre (10) dans lequel des conduits de filtrat s'étendent entre des éléments de filtre et une extrémité distributrice (11) de l'axe de filtre (10), **caractérisé en ce qu'**il comprend la combinaison pour une vanne de distribution d'un filtre à vide selon l'une des revendications 11 à 13.

15. Procédé pour remplacer un corps de vanne de distribution (1) d'un filtre à vide selon la revendication 14 équipé d'une combinaison pour une vanne de distribution selon la revendication 13, **caractérisé par** les étapes consistant à:
- détacher d'une structure fixe du filtre à vide le dispositif de fixation (20) ensemble avec un premier corps de vanne de distribution (1) ;
- détacher du dispositif de fixation (20) le premier corps de vanne de distribution (1) ;
- attacher au dispositif de fixation (20) un deuxième corps de vanne de distribution (1) ;
- attacher à la structure fixe du filtre à vide le dispositif de fixation (20) ensemble avec le deuxième corps de vanne de distribution (1).

16. Procédé pour moderniser une vanne de distribution d'un filtre rotatif à vide, comprenant les étapes consistant à :
- enlever une vanne de distribution préexistante,
**caractérisé par** l'étape consistant à
- fournir une combinaison pour une vanne de distribution d'un filtre à vide selon l'une des revendications 11 à 13,
dans lequel la combinaison pour une vanne de distribution est attaché au filtre à vide.
